(19) Europäisches Patentamt
European Patent Office
Office européen des brevets

(11) **EP 4 080 631 A1**

(12) **EUROPEAN PATENT APPLICATION**

(43) Date of publication:
**26.10.2022 Bulletin 2022/43**

(21) Application number: **21315067.5**

(22) Date of filing: **19.04.2021**

(51) International Patent Classification (IPC):
***H01M 8/2475*** $^{(2016.01)}$

(52) Cooperative Patent Classification (CPC):
**H01M 8/2475**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Genevos SAS**
**17440 Aytré (FR)**

(72) Inventor: **Sharp, Phil**
**17440 Aytré (FR)**

(74) Representative: **BiiP cvba**
**Engels Plein 3 bus 102**
**3000 Leuven (BE)**

(54) **A FUEL CELL POWER MODULE**

(57) The present invention is directed to a fuel cell power module housed in a sealed casing (2) that is subdivided into separate enclosed compartments by a sealed partition (21) with one of the said compartments being an electric compartment (3) comprising power management components (31, 32, 33), the other being a fuel cell compartment (4) comprising a fuel cell (41) and its inlet and outlet circuits containing flammable fluids.

**Fig. 1**

EP 4 080 631 A1

## Description

## Technical field

The present invention relates to a fuel cell power module. In particular, it relates to a fuel cell power module for marine applications. Further, the present invention relates a hydrogen storage and power system comprising such fuel cell power module.

## Background

A fuel cell power module is a device that generates electrical power from a fuel and oxidant. Electricity is generated through the oxidation of a reducing-fuel on an electrode (anode), for example hydrogen, coupled with the reduction on the other electrode (cathode) of an oxidiser, normally oxygen extracted from an air supply.

The fuel cell power module can be constituted of a plurality of cells connected in series to reach the desired power output.

The integration of the fuel cell power modules is a key element to ensure the safe operation and reliability of the fuel cell system throughout its service life in a vehicle, boat or stationary power application. The fuel cell systems can however be quite complex to install, as they comprise a large number of components.

The safety measures for fuel cell power modules for marine applications such as a vessel are more stringent than for land applications principally because there is no assumed possibility to leave and walk away from a vessel in the event of fire or damage.

Additionally, fuel cells on a vessel have to be protected from the aggressive marine environment. An air-tight space is therefore required for the fuel cell installations aboard vessels, with respect to the surrounding spaces. Further, means of filtering and drying the air is also required to ensure the continued reliability of the fuel cell system.

Document US2004072046 describes a fuel cell power module for marine applications. The module comprises a chamber split into a first 120 and a second compartment. The first compartment houses an air pump, the hydrogen inlet/outlet, hydrogen valves, electrical components, and a set of filters to receive a filtered airflow into the chamber. The second compartment houses a stack of fuel cells and a humidification. The chamber is provided with partitions which form a conduit to allow cooling air to be suctioned through the stack of fuel cells by a cooling ventilator. The partitions are sealed to prevent the gases and the liquids mixing between compartments.

Despite the partitioning and ducting of the fuel cell system, a fundamental safety issue arises from this concept, in that firstly hydrogen gas pipework and pressure devices are shared with electrical devices, namely a system controller, without sufficient ventilation. This allows the potential for build-up of hydrogen in the compartment which, when accounting for the potential leakage from hydrogen devices, could reach concentrations that would lead to possible ignition by electrical components that were not resistant to hazardous, explosive environments (i.e. non-ATEX-rated components)

Considering the above, it is a first object of the present invention to provide a fuel cell power module minimizing potential risk of ignition in order to be suitable for marine applications.

Another objective of the present invention is to provide a fuel cell power module containing as much of the fuel cell systems as possible while still minimizing potential risk of ignition in order to be suitable for marine applications.

Another objective of the present invention is to provide a fuel cell power module avoiding the need to be installed in a specific, enclosed and sealed room, and therefore could be installed anywhere inside a vessel.

In addition, a fuel cell power module of the present invention enables the safety system for the fuel cell power system to be standardised and controlled, irrespective of the vessel, vehicle, or other application where it is installed.

## Summary of the invention

In the first aspect of the present invention, a fuel cell power module is provided housed in a sealed casing (2) that is subdivided into separate enclosed compartments by a sealed partition (21) with one of the said compartments being an electric compartment (3) comprising power management components (31, 32, 33), the other being a fuel cell compartment (4) comprising a fuel cell (41) and its inlet and outlet circuits containing flammable fluids. The module can be made up of one continuous structure or multiple structures joined together.

In an embodiment of the present invention, cables and non-flammable fluids and associated piping may pass through the partition of the module via sealed junctions through the partition to maintain separate air spaces between compartments.

In another embodiment, the fuel cell compartment may include additional components such as balance of plant components e.g. a compressor (43) and/or a liquid coolant filter (45) and/or a liquid coolant pump (46) and/or a thermostatic tap (47) which may be required for operation of the hydrogen fuel cell or for providing additional module functionality.

In a particular embodiment in accordance with the present invention, the sealed partition is only passed through by the power management connection cables (c1, c2).

In another particular embodiment, the sealed partition is only passed through by a fuel cell cathode gas inlet conduit (cO2f).

In a preferred embodiment of the present invention the sealed partition is only passed through by power management connection cables (c1, c2) and/or a cathode gas conduit (cO2f) of which the inlet opens into the electric compartment and which is connected to the air supply system of the fuel cell (41), and/or a pipe cCoolFPT and pipe cHot respectively providing cooling water to the fuel cell 41 and discharging cooling water from the fuel cell.

Further, in an embodiment according to the present invention, a fuel cell power module may be provided wherein the pressure within the fuel cell compartment is kept lower than the electrical compartment and/or lower than the surrounding space outside of the module in order to provide an additional layer of safety.

In addition, a fuel cell power module may be provided, where multiple fuel cells are present in the fuel cell space sharing a common fuel inlet and exhaust in order to increase power output without compromising the efficiency of the module in terms of cost per kW, weight/size per kW, and overall energy efficiency (kWh of electrical energy produced per kg of hydrogen used).

In a particular embodiment of the present invention, optionally in combination with other embodiments, a fuel cell power module is provided, formed of a sealed casing (2) separated into two compartments (3, 4) by a sealed partition (21), one of said two compartments being an electric compartment (3) comprising a system controller (31), the other being a cell compartment (4) comprising a fuel cell (41) arranged to be supplied with hydrogen by a hydrogen supply system connected to a hydrogen inlet connection (iH2), supplied with oxygen by an air supply system connected to an air inlet connection (iO2), to repel gases by a gas discharge system connected to a repel connection (iGaz), to repel water through a water discharge system connected to a repel connection (iH20), and provided to be cooled by a liquid cooling system connected to a cooling connection (iCool).

Further, a fuel cell power module of the present invention may comprise a power management system adapted to regulate voltage and current so that the power output can be connected directly to the load application, controlling hybridisation, and avoiding the need for external electrical regulation.

In addition, the casing (2) of the fuel cell power module may be adapted to enable multiple modules to be safely combined and/or stacked vertically, one on top of the other, without additional supporting structure or cabinets.

In a second aspect of the present invention, a hydrogen storage and power system is provided comprising a fuel cell power module as described in accordance with the present invention. Such hydrogen storage and power system may be suitable for being installed in high safety requiring applications, such as marine applications and in particular vessels.

**Description of the figures**

Other advantages and particularities of the invention will appear upon reading the detailed description of implementations and embodiments which are not at all limiting, regarding the appended drawings, wherein:

Figure 1 schematically represents a supply module according to a first embodiment of the invention,
Figure 2 schematically represents a supply module according to a second embodiment of the invention,
Figure 3 schematically represents a system according to an example assembly of an embodiment of the invention.

**Detailed description**

With the embodiments described below not being at all limiting, variants of the invention only comprising a selection of features described can in particular be considered, subsequently isolated from the other features described, if this selection of features is sufficient to give a technical advantage or to differentiate the invention with respect to the prior art. This selection comprises at least one feature, preferably operational without structural details, or with only some of the structural details if this part only is sufficient to give a technical advantage or to differentiate the invention with respect to the prior art.

A fuel cell power module according to the present invention is described below (1), said module housed in a sealed casing (2) that is subdivided into separate enclosed compartments by a sealed partition (21) with one of the said compartments being an electric compartment (3) comprising power management components (31, 32, 33), the other being a fuel cell compartment under forced ventilation (4) comprising a fuel cell (41) and its inlet and outlet circuits containing flammable fluids. This arrangement prevents potential explosive fuel gases present in the fuel cell compartment from circulating in the electric compartment and thus avoids associated risk of ignition from electrical components.

Additionally, forced ventilation systems integrated into the module ensures that concentrations of explosive gas resulting from component leakage are kept well below the lower explosion limit (LEL) of the gas.

The forced air ventilation systems are controlled so as to ensure that the pressure in the non-hazardous, electrical compartment is higher than that of the hazardous fuel cell compartment, so as to provide an additional level of safety against potential fuel gas intrusion.

Likewise, the pressure in the hazardous fuel cell compartment is kept at a lower pressure than the space external to the module, in addition to the adjacent electrical compartment, to add a level of safety to the fuel gas escaping outside of the fuel cell module.

The casing of the module protects and contains as much of the fuel cell systems as possible, that meet the air-tight safety requirements of the fuel cell space. As long as the module is connected to ventilation pipes that lead outside of the vessel, it avoids the need to be installed in a specific, enclosed and sealed room (as is the case with the "fuel cell in a cage" approach), and can in principle be installed anywhere inside a vessel. By having a consistent, controlled ventilated space, within the enclosure, the module ensures that the ventilation flow rates are sufficiently high, consistent and controlled for any vessel, to meet safety criteria and prevent build-up of hydrogen. Essentially the module enables the safety system to be standardised and controlled for the fuel cell power system, irrespective of the vessel, vehicle, or other application, where it is installed.

In an embodiment of the present invention, the sealed partition is passed through by control, power, and other electrical cables (c1, c2) principally connecting the fuel cells with the power management components.

In an embodiment of the present invention, the sealed partition is passed through additionally by a -fuel cell cathode gas inlet pipe (cO2f). This fuel cell cathode gas inlet conduit keeps the cathode gas, which is typically air, separated from the space of the fuel cell compartment and is sealed into the partition.

In this particular embodiment, the fuel cell cathode gas inlet conduit opens into the electric compartment and is connected to the air supply system of the fuel cell. This may assist in cooling of the power management components.

In a further embodiment, the sealed partition may be bypassed by other non-flammable fluid conduits connected to the fuel cell. These conduits are sealed to prevent fluid leakage between the fuel cell ventilated space and the air space of the electrical compartment.

In a particular embodiment, the electrical compartment may contain a voltage converter that may be liquid-cooled from coolant bypassing the sealed partition that is connected to the fuel cell cooling system. The power management system integrated into the module outputs electrical power at a specific voltage that is regulated in order to be compatible with the external application load, as so avoids the need for an additional external voltage converter. The power management system also controls the current output from the module so as to control the hybridisation with an external battery pack for maximising fuel efficiency and fuel cell stack lifetime.

In an embodiment, the fuel cell compartment may include balance of plant components such as a compressor (43) and/or a liquid coolant filter (45) and/or a liquid coolant pump (46) and/or a thermostatic tap (47)) for a hydrogen fuel cell, e.g. hydrogen gas pipework and devices, a cathode gas inlet compressor, and a liquid cooling pump.

In a particular embodiment of the present invention, the pressure within the electrical compartment may be kept higher than the pressure within the fuel cell compartment, so mitigating risk of possible hydrogen transfer across the partition in the event of joint damage or failure, for example by adding input ventilation fans in the electrical compartment.

Further, the electrical compartment may contain an electrical energy storage system in the way of a battery or supercapacitor that is charged from the fuel cell and that can be used for start-up, rapid power response, or peak power response if hybridised with the fuel cell.

In a further embodiment in accordance with the present invention, multiple fuel cells may be present in the fuel cell compartment sharing a common fuel inlet and exhaust.

A fuel cell power module in accordance with the present invention mitigates the risk of ignition by ensuring that all non-explosion rated electrical components (non-ATEX-rated) are housed in a separate compartment i.e. the electrical compartment. The separation of non-ATEX electrical and fuel cell components by the sealed partition of the module, ensures there is mitigated risk of explosive gas coming into contact with these electrical components, which can include system controllers, voltage converters, and energy storage components such as batteries or capacitors.

In addition, the present invention further mitigates risk of ignition by providing forced ventilation in the fuel cell space from potential leakage of fuel system valves, connecters and piping, to ensure fuel gas concentration is kept well below the lower explosion limit.

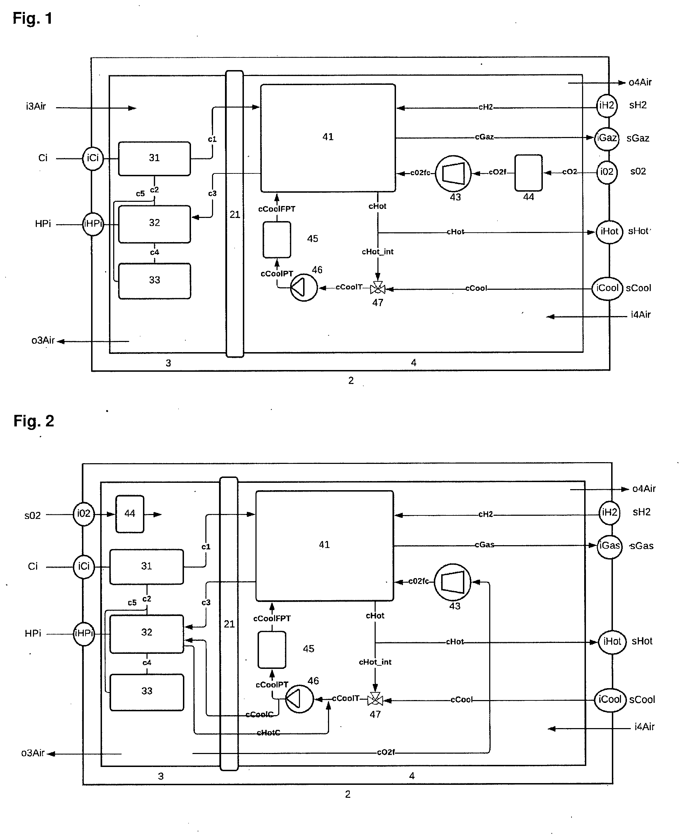

In reference to **Figure 1**, a fuel cell power module in accordance with the present invention is now described in more detail.

The casing 2 is a rigid casing that is both watertight and airtight.

To minimise weight of the supply module 1, the casing can be made of a composite material as a monocoque structure that avoids the need of a separate stiffening frame.

The casing can be made of fire-retardant composite materials.

The casing 2 is separated into two compartments 3 and 4 by a sealed partition 21. The compartment 3 is equipped with electric and electronic components, while the compartment 4 is equipped with a hydrogen fuel cell 41. This arrangement prevents possible hydrogen gas present in the compartment 4 from circulating the electric and electronic components, present in compartment 3, and thus minimising potential ignition risk.

The compartment 3 is ventilated by means of an air inlet i3Air and an air outlet o3Air disposed at the interface between the outside of the casing 2 and the inside of the compartment 3.

The compartment 3 comprises a system controller 31 connected to one or more control interfaces Ci outside of the casing 3 by means of a rapid connection iCi disposed on the outer surface of the casing 2. The system controller comprises a computer program product to control the operation of the fuel cell 41 by means of a connecting cable c1. The connecting cable c1 passes through the sealed partition 5. The sealing to gas is conserved. In the example represented, the electric compartment 3 further comprises a power control unit 32. The power control unit 32 is connected to power current interfaces HPi outside of the compartment 3 by means of a rapid connection iHPi disposed on the outside surface of the casing 2. The power control unit 32 converts high-power voltage, for example by means of a DC/DC converter to a required output voltage. When such a control unit 32 is present, it is further connected to the system controller 31 by means of a connecting cable c2. The computer program of the system controller 31 thus controls the power control unit 32. The power control unit 32 can also regulate the quantity of power produced by the fuel cell 41, according to the instructions of the system controller 31.

The system controller 31 is further configured to read/control all the other electronic devices which could exist inside the fuel cell power module (solenoid valves, hydrogen sensors, thermostats, etc.), and external to the module (battery management systems, motor controllers, hydrogen reservoir pressure, solenoid valves etc.).

In the example represented, the electric compartment 3 further comprises an energy reserve 33, for example a battery or a supercapacitor, which is optional. When such an energy reserve 33 is present, it is further connected to the power control unit, when it is present, by means of a connecting cable c4. When such an energy reserve 33 is present, it can be further connected to the system controller 31 by means of a connecting cable c4. The computer program of the system controller 31 thus controls the hybridisation between the energy provided by the fuel cell 41 and the energy reserve 33.

The fuel cell compartment 4 is ventilated by means of an air inlet i4Air and an air outlet o4Air disposed at the interface between the outside of the casing 2 and the inside of the casing 4. This ventilation allows to guarantee a rapid discharge of the hydrogen in case of leakage and prevent accumulation.

Conventionally, the fuel cell 41 comprises a succession of elementary cells (not represented), disposed to the side of one another. Each of these cells defines an anodic compartment, where oxidation from hydrogen is produced, as well as a cathodic compartment, wherein oxygen from the air is reduced, with water produced.

Furthermore, an ion exchange membrane physically separates the anodic and cathodic compartments of a cell in question, which are moreover connected by means of an external electric circuit.

A hydrogen flow is provided by a hydrogen supply pipe cH2 forming part of a hydrogen supply system. The hydrogen supply system can comprise a pressure regulator. The hydrogen gas system can also comprise overpressure valves and solenoid valves.

The gas pipe cH2 can be connected to a hydrogen source sH2 outside of the compartment 4 by means of a rapid hydrogen connection iH2 disposed at the interface of the compartment 4 on the outer surface of the casing 2.

The hydrogen flow is directed towards the anode side of the membrane/electrode assembly. The hydrogen is oxidised catalytically at the anode to give protons and electrons, according to the following electrochemical half-reaction: $2H_2 \rightarrow 4H^+ + 4e^-$.

At the same time, a dioxygen flow is provided by an air supply pipe cO2fc forming part of a dioxygen supply system.

More specifically, in the example represented, the pipe c02fc is connected to the outlet of a compressor 43 forming part of the air supply system, which pressurises a gas, at the air inlet pressure required for the fuel cell 41. The compressor is an optional element.

The air inlet of the compressor 43, or the pipe c02fc, is connected by means of a pipe c02f at the outlet of an air filter 44 which forms part of the air supply system. The air filter is an optional element.

The inlet of the air filter, when the air filter is present, can be connected to an air source s02 outside of the compartment 4 by means of a pipe c02 connected to a rapid air inlet connection i02 disposed at the interface of the compartment 4 on the outer surface of the casing 2.

The air supply system can further comprise additional filtration, humidifiers, air cooling systems or also flow sensors.

The dioxygen flow is directed from the cathode side of the membrane/electrode. The dioxygen molecules react with the protons passing through the polymer electrolyte membrane and the electrons arriving through the external circuit in order to form water molecules. This reduction reaction in the electrolytic half-cell is written: $O_2 + 4H^+ + 4e^- \rightarrow 2 H_2O$.

The overall reaction obtained by combining these two half-equations is none other than the opposite of water electrolysis. If the thermal and electric components of this summary are added, it is written:

$$2H_2 + O_2 \rightarrow 2H_2O + heat + electricity$$

The electric current produced is connected to the power control unit 32 by means of an electric cable c3. The connecting cable c3 passes through the sealed partition 21. The sealing to gas is conserved.

The water molecules produced by the fuel cell 41, as well as excess air and hydrogen are removed from the fuel cell 41 via the gas removal pipe cGaz. The gas pipe cGaz can be connected to an outlet sGaz outside of the casing 2 by means of a rapid connection iGaz disposed at the interface of the compartment 4 on the outer surface of the casing 2.

In the embodiment represented, the fuel cell 41 is cooled by a liquid cooling system comprising a pipe cCoolFPT which provides cooling water to the fuel cell 41.

In the example represented, the liquid cooling system further comprises a liquid coolant filter 45 of which the outlet is connected to the pipe cCoolFPT and of which the inlet is connected to a pipe cCoolPT.

In the example represented, the liquid cooling system comprises a pump 46 of which the outlet is connected to the pipe cCoolPT and of which the inlet is supplied by a pipe cCoolT. The heat produced by the fuel cell 41 is principally discharged through the cooling outlet pipe cHot of a water discharge system. The pipe cHot can be connected to an outlet sHot outside of the compartment 4 by means of a rapid cooling connection iHot disposed at the interface of the compartment 4 on the outer surface of the casing 2.

In the example represented, the liquid cooling system comprises a thermostatic tap 47 to regulate fuel cell temperature, of which the outlet is connected to the pipe cCoolT, and of which the inlets are connected to an external cold coolant pipe cCool, and the internally-circulated hot coolant pipe, cHot_int.

The coolant pipe cCool can be connected to a source sCool outside of the compartment 4 by means of a rapid connection iCool disposed at the interface of the compartment 4 on the outer surface of the casing 2.

The liquid cooling system can further comprise particle filters, deionisation filters, flow sensors, refilling tank, and a heat exchanger.

In the first embodiment, only the electric connections pass through the sealed partition 21.

In reference to **Figure 2**, another embodiment of a module according to the invention is now described, only with respect to its differences with the embodiment of Figure 1.

In this embodiment, the air supply sO2 passes through the filter 44 which is moved into the electric compartment 3. The conduit c02f which provides air to the cell opens into the electric compartment 3 to return the prefiltered air from the electronic compartment. The advantage of this system is to use the air filter of the fuel cell to protect the electric components from corrosion and to ensure their longevity. The connection i02 is also moved to the interface of the electric compartment 3. The filter can typically also be embedded or connected directly to the casing 2 at the opening i02, with air drawn in from the atmosphere outside of the casing 2.

All air ventilation connections to the casing can include fans to control the compartment ventilation rates and differential pressures between compartments.

In this particular embodiment, electric connections, the air inlet pipe, and water cooling to the power management system pass through the sealed partition 21.

In these two embodiments, the interfaces for the air inlets and air outlets are placed on opposite faces of the casing 1 or on one single side, such that the modules can be stacked — either side-by-side, or one top of one another in rack format.

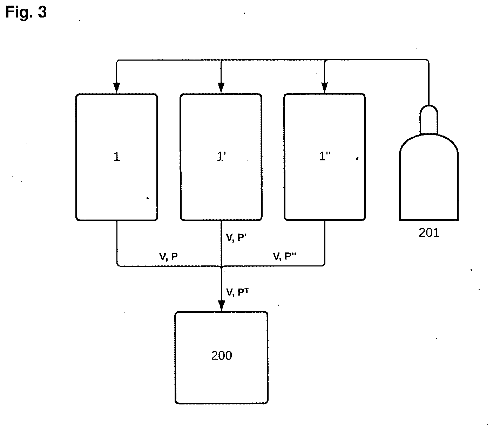

**Figure 3** illustrates a fuel cell power system comprising several fuel cell power modules 1, 1', 1" of which the power outlets are connected directly in parallel to the main electrical bus that supplies the application load 200, typically an electrical propulsion system, and where fuel is fed to the modules from a common fuel storage system 201. Direct connectivity is achieved as a result of the internal voltage regulation of each module, ensuring a common voltage, V, and thus avoiding the need for external voltage regulator. The total power $P^T$ provided to the load is simply is a sum of the power output from each module (P + P' + P").

This modular arrangement provides the advantage of redundancy in case of a malfunction of a single module, and the ability to have differential powers between modules so as to optimise the fuel efficiency of the entire system, or to shut down certain modules, again for increasing efficiency.

Although the present invention has been described principally in terms of proton exchange membrane fuel cell using hydrogen as fuel, it must be appreciated that its applicability is not so limited, and other types of fuel, such as methanol, ammonia, propane, butane, and other types of fuel cell, such as an alkaline fuel cell, a phosphoric acid fuel cell, a molten carbonate fuel cell, zinc-air cell, and solid oxide fuel cell.

Of course, the invention is not limited to the examples which have just been described, and numerous arrangements can be applied to these examples without moving away from the scope of the invention. In addition, the different features, forms, variants and embodiments of the invention can be associated with one another according to various combinations insofar as they are not incompatible or exclusive from one another.

**Claims**

1.   A fuel cell power module housed in a sealed casing (2) that is subdivided into separate enclosed compartments by a sealed partition (21) with one of the said compartments being an electric compartment (3) comprising power management components (31, 32, 33), the other being a fuel cell compartment (4) comprising a fuel cell (41) and its inlet and outlet circuits containing flammable fluids.

2.   A module according to claim 1, where cables and non-flammable fluids and associated piping pass through the partition of the module via sealed junctions through the partition to maintain separate air spaces between compartments.

3.   A module according to claim 1, wherein the sealed partition is only passed through by the power management connection cables (c1, c2).

4.   A module according to claim 1, wherein the sealed partition is only passed through by a fuel cell cathode gas inlet conduit (cO2f).

5.   A module according to claim 1, wherein the sealed partition is only passed through by power management connection cables (c1, c2) and/or a cathode gas conduit (cO2f) of which the inlet opens into the electric compartment and which is connected to the air supply system of the fuel cell (41), and/or a pipe cCoolFPT and pipe cHot respectively providing cooling water to the fuel cell 41 and discharging cooling water from the fuel cell.

**6.** A module according to any one of the preceding claims, where the fuel cell compartment includes a compressor (43) and/or a liquid coolant filter (45) and/or a liquid coolant pump (46) and/or a thermostatic tap (47).

**7.** A module according to any one of the preceding claims, wherein the pressure within the fuel cell compartment is kept lower than the electrical compartment and/or lower than the surrounding space outside of the module.

**8.** A module according to any one of the preceding claims, where multiple fuel cells are present in the fuel cell space sharing a common fuel inlet and exhaust.

**9.** A module according to any of the preceding claims, formed of a sealed casing (2) separated into two compartments (3, 4) by a sealed partition (21), one of said two compartments being an electric compartment (3) comprising a system controller (31), the other being a cell compartment (4) comprising a fuel cell (41) arranged to be supplied with hydrogen by a hydrogen supply system connected to a hydrogen inlet connection (iH2), supplied with oxygen by an air supply system connected to an air inlet connection (iO2), to repel gases by a gas discharge system connected to a repel connection (iGaz), to repel water through a water discharge system connected to a repel connection (iH20), and provided to be cooled by a liquid cooling system connected to a cooling connection (iCool).

**10.** A fuel cell power module according to any of the preceding claims, comprising a power management system adapted to regulate voltage and current so that the power output can be connected directly to the load application, controlling hybridisation, and avoiding the need for external electrical regulation.

**11.** A fuel cell power module according to any of the preceding claims, wherein the casing is adapted to enable multiple modules to be safely combined and/or stacked vertically, one on top of the other, without additional supporting structure or cabinets.

**12.** A hydrogen storage and power system comprising a fuel cell power module according to any of the preceding claims.

**Fig. 1**

**Fig. 2**

**Fig. 3**

Europäisches
Patentamt

European
Patent Office

Office européen
des brevets

# EUROPEAN SEARCH REPORT

Application Number

EP 21 31 5067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/340749 A1 (CHAUDRON VALERY [FR]) 26 November 2015 (2015-11-26) | 1-3,5-12 | INV. H01M8/2475 |
| Y | * paragraphs [0035] - [0105]; figure 1 * | 4 | |
| Y | DE 10 2011 114717 A1 (DAIMLER AG [DE]) 26 April 2012 (2012-04-26) * paragraphs [0023] - [0026]; figure 1 * | 4 | |
| A | US 2011/008700 A1 (PATEL PINAKIN [US] ET AL) 13 January 2011 (2011-01-13) * the whole document * | 1-12 | |
| A | US 2009/246566 A1 (CRAFT JR THOMAS F [US] ET AL) 1 October 2009 (2009-10-01) * the whole document * | 1-12 | |
| A | US 2008/156549 A1 (LEBOE DAVID A [CA] ET AL) 3 July 2008 (2008-07-03) * the whole document * | 1-12 | |

TECHNICAL FIELDS
SEARCHED (IPC)

H01M

The present search report has been drawn up for all claims

| Place of search | Date of completion of the search | Examiner |
|---|---|---|
| Munich | 12 October 2021 | Brune, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 31 5067

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2021

| Patent document cited in search report | Publication date | Patent family member(s) | Publication date |
|---|---|---|---|
| US 2015340749 A1 | 26-11-2015 | EP 2936601 A1<br>ES 2765179 T3<br>FR 3000303 A1<br>US 2015340749 A1<br>WO 2014102064 A1 | 28-10-2015<br>08-06-2020<br>27-06-2014<br>26-11-2015<br>03-07-2014 |
| DE 102011114717 A1 | 26-04-2012 | NONE | |
| US 2011008700 A1 | 13-01-2011 | NONE | |
| US 2009246566 A1 | 01-10-2009 | US 2009246566 A1<br>US 2009246577 A1<br>US 2009246582 A1<br>US 2009269636 A1<br>US 2009286119 A1 | 01-10-2009<br>01-10-2009<br>01-10-2009<br>29-10-2009<br>19-11-2009 |
| US 2008156549 A1 | 03-07-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004072046 A